(19) Europäisches Patentamt
European Patent Office
Office européen des brevets

(11) **EP 3 715 797 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(51) Internationale Patentklassifikation (IPC):
**G01F 1/66** (2022.01)      **G01F 1/74** (2006.01)
**G01F 1/716** (2006.01)     **G01F 15/14** (2006.01)
**G01F 15/18** (2006.01)     **G01F 7/00** (2006.01)
**G01P 5/24** (2006.01)      **G01F 1/667** (2022.01)

(21) Anmeldenummer: 20163308.8

(22) Anmeldetag: **16.03.2020**

(52) Gemeinsame Patentklassifikation (CPC):
**G01F 1/662; G01F 1/66; G01F 1/74; G01F 7/00; G01P 5/24;** G01F 1/667; G01F 1/716; G01F 15/14; G01F 15/18

(54) **ULTRASCHALLDURCHFLUSSMESSGERÄT, VERFAHREN ZUM BETREIBEN EINES ULTRASCHALL-DURCHFLUSSMESSGERÄTS, MESSVERBUND UND VERFAHREN ZUM BETREIBEN EINES MESSVERBUNDS**

ULTRASONIC FLOW METER, METHOD FOR OPERATING AN ULTRASONIC FLOW METER, MEASURING ASSEMBLY AND METHOD FOR OPERATING A MEASURING ASSEMBLY

DÉBITMÈTRE À ULTRASONS, PROCÉDÉ DE FONCTIONNEMENT D'UN DÉBITMÈTRE À ULTRASONS, ENSEMBLE DE MESURE ET PROCÉDÉ DE FONCTIONNEMENT D'UN ENSEMBLE DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2019 DE 102019108189**

(43) Veröffentlichungstag der Anmeldung:
**30.09.2020 Patentblatt 2020/40**

(73) Patentinhaber: **Krohne AG**
**4019 Basel (CH)**

(72) Erfinder:
• **Hogendoorn, Cornelis Johannes**
**4211 BG Spijk (NL)**
• **Pors, Jan Teunis Aart**
**3262 EK Oud-Beijerland (NL)**
• **Bousché, Olaf Jean Paul**
**3319 PH Dordrecht (NL)**

(74) Vertreter: **Gesthuysen Patentanwälte Partnerschaftsgesellschaft mbB**
**Huyssenallee 68**
**45128 Essen (DE)**

(56) Entgegenhaltungen:
**EP-A1- 2 184 588          EP-A1- 2 835 620**
**WO-A1-2005/040732      WO-A1-2012/067637**
**DE-A1-102006 020 721   DE-A1-102008 054 257**
**DE-U1-202015 009 558   US-A- 5 719 329**
**US-A1- 2015 377 691      US-A1- 2017 328 152**
**US-A1- 2018 110 913      US-A1- 2018 321 067**
**US-B2- 9 840 904**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Das Dokument US 2017/328152 A1 geht aus von einem Ultraschall-Durchflussmessgerät mit einem Messrohr, einer Steuerungseinrichtung und mindestens einer ersten und einer zweiten Ultraschallmesseinrichtung, wobei das Messrohr einen Messrohrinnenraum und eine Messrohrlängsachse aufweist, wobei jede der Ultraschallmesseinrichtungen am Messrohr angeordnet ist, wobei jede Ultraschallmesseinrichtung einen ersten und einen zweiten Ultraschallwandler aufweist, wobei der erste und der zweite Ultraschallwandler jeder Ultraschallmesseinrichtung eine Schallmessstrecke mit einer Schallachse aufspannen und die Schallmessstrecke und die Schallachse den Messrohrinnenraum durchdringen und wobei die Steuerungseinrichtung zur Durchführung von Ultraschallmessungen mit den Ultraschallmesseinrichtungen ausgebildet ist. Darüber hinaus betrifft das Dokument US 2017/328152 A1 ein Verfahren zum Betreiben eines solchen Ultraschall-Durchflussmessgeräts.

In vielen Anwendungsbereichen, in denen Medien durch Rohrleitungen transportiert werden, ist es von Interesse den Durchfluss, im Detail den Volumendurchfluss bzw. den Massedurchfluss und/oder auch die Geschwindigkeit des Mediums zu bestimmen.

Häufig weist das zu vermessende Medium eine insbesondere unregelmäßige Mischung aus einer flüssigen und/oder gasförmigen und/oder festen Phase auf. Dies macht eine Bestimmung insbesondere der einzelnen Phasen prozesstechnisch besonders anspruchsvoll.

Für den Nachweis von den zuvor genannten einzelnen Phasen eines mehrphasigen Mediums sind unterschiedliche Messprinzipien bekannt.

Ein Messgerät für die Bestimmung der Strömungsgeschwindigkeit eines flüssigen und/oder gasförmigen Mediums ist das Ultraschall-Durchflussmessgerät.

Wie oben dargelegt, weist ein solches Messgerät wenigstens eine erste Ultraschallmesseinrichtung mit zwei Ultraschallwandlern auf, wobei die Ultraschallwandler häufig jeweils als Ultraschallsender und als Ultraschallempfänger funktionieren. Die Ultraschallwandler sind nun derart an dem Messrohr angeordnet, dass das von dem Ultraschallsender ausgesendete Messsignal nach dem Durchlauf der Schallmessstrecke von dem Ultraschallempfänger empfangen wird.

Zur Bestimmung der Strömungsgeschwindigkeit wird das Messsignal entlang der Schallmessstrecke sowohl in Strömungsrichtung des Mediums als auch entgegen der Strömung in das Medium ausgesendet bzw. von dem jeweiligen Ultraschallempfänger empfangen. Aufgrund des Mitführeffektes weisen die Messsignale, die in Strömungsrichtung ausgesendet werden, eine kürzere Laufzeit auf als Signale, die entgegen der Strömung ausgesendet werden. Aus diesem Laufzeitunterschied lässt sich die Strömungsgeschwindigkeit des Mediums bestimmen.

Der Erfindung liegt die Aufgabe zugrunde, ein Ultraschalldurchflussmessgerät nach Anspruch 1 und ein Verfahren nach Anspruch 4 zum Betreiben eines entsprechenden Ultraschall-Durchflussmessgeräts zur zuverlässigen Vermessung eines mehrphasigen Mediums anzugeben. Darüber hinaus liegt der Erfindung die Aufgabe zugrunde, einen Messverbund nach Anspruch 10 mit einem Ultraschall-Durchflussmessgerät und einem Mehrphasendurchflussmessgerät und einem Verfahren zum Betreiben eines entsprechenden Messverbunds anzugeben.

Erfindungsgemäß wird die zuvor dargelegte Aufgabe durch ein eingangs genanntes Ultraschall-Durchflussmessgerät dadurch gelöst, dass die Schallachse der ersten Ultraschallmesseinrichtung und die Schallachse der zweiten Ultraschallmesseinrichtung eine Schallmessebene aufspannen, die im Wesentlichen parallel zur Messrohrlängsachse verläuft.

Im Rahmen der vorliegenden Erfindung verläuft die Messrohrlängsachse durch die Querschnittsmitte des Messrohrquerschnittes.

Wenn es heißt, dass die Schallmessebene im Wesentlichen parallel zur Messrohrlängsachse verläuft, so ist damit gemeint, dass der Winkel zwischen der Messrohrlängsachse und der Schallmessebene kleiner als $\pm$ 45°, insbesondere kleiner als $\pm$ 30°, vorzugsweise kleiner als $\pm$ 15°, besonders bevorzugt kleiner als $\pm$ 5° ist. Dabei schneidet die Schallmessebene vorzugsweise die Messrohrlängsachse im Bereich der Ultraschallwandler nicht. Gemäß dieser Ausgestaltung sind demnach die erste und die zweite Ultraschallmesseinrichtung oberhalb oder unterhalb der Messrohrlängsachse angeordnet. Vielmehr bezieht sich die Winkelangabe auf einen Schnittpunkt der Schallmessebene mit der Messrohrlängsachse, der auch außerhalb des Ultraschall-Durchflussmessgerätes liegen kann. Gemäß einer besonders bevorzugten Ausgestaltung verläuft die Schallmessebene parallel zur Messrohrlängsachse.

Diese erfindungsgemäße Ausgestaltung des Ultraschall-Durchflussmessgeräts weist einerseits den Vorteil auf, dass durch eine zweite Ultraschallmesseinrichtung die Messung der ersten Ultraschallmesseinrichtung überprüft und/oder die Messung durch die zweite Ultraschallmesseinrichtung zusätzlich ausgewertet werden kann und/oder dass in dem Fall, in dem eine Ultraschallmesseinrichtung zumindest zeitweise ausfällt, die andere Ultraschallmesseinrichtung die Vermessung des Mediums gewährleistet.

Darüber hinaus sind die Ultraschallmesseinrichtungen derart an dem Messrohr angeordnet, dass die beiden Schallachsen das Medium innerhalb einer Schallmessebene, die im Wesentlichen parallel zur Messrohrlängsachse ausgerichtet ist, vermessen. Dies hat den Vorteil, dass insbesondere dann, wenn die Schallmessebene die Messrohrlängsachse im Bereich der Ultraschallwandler nicht schneidet, die redundante Vermessung des strömenden Mediums im Wesentlichen innerhalb derselben Ebene des Strömungsquerschnittes erfolgt.

Dadurch, dass diese Schallmessebene im Wesentlichen parallel zur Messrohrlängsachse ausgerichtet ist, wird weiterhin gewährleistet, dass im Betrieb durch die beiden Ultraschallmesseinrichtungen dieselbe Phase vermessen wird. Denn abgesehen von unregelmäßigen Schwallströmungen ist bei mehrphasigen Medien in einer Ebene des Messrohrs bzw. des Strömungsquerschnittes genau eine beispielsweise flüssige oder gasförmige Phase angeordnet. Besonders bevorzugt sind die Ultraschallmesseinrichtungen derart an dem Messrohr angeordnet, dass sie die gasförmige Phase des strömenden Mediums vermessen.

Gemäß einer Ausgestaltung sind die Ultraschallwandler derart angeordnet, dass die Schallachse der ersten Ultraschallmesseinrichtung und die Schallachse der zweiten Ultraschallmesseinrichtung einander kreuzen. In diesem Fall vermessen die Ultraschallwandler das strömende Medium in demselben Teilbereich in Bezug auf die Messrohrlängsachse. Alternativ können die Ultraschallwandler in Bezug auf die Messrohrlängsachse hintereinander angeordnet sein. Beispielsweise können die Schallachsen parallel zueinander ausgerichtet sein oder die erste Schallachse und die zweite Schallachse können zusammen eine V-Form bilden. Denkbar ist ebenfalls, dass die Schallachsen eine Reflexion an der Messrohrinnenwand aufweisen.

Besonders bevorzugt ist es, wenn die Schallmessstrecken bzw. die Schallachsen der ersten und/oder der zweiten Ultraschallmesseinrichtung keine Reflexion an der Messrohrinnenwand aufweisen.

Gemäß einer weiteren Ausgestaltung liegt die Schallmessebene in Bezug auf den Erdschwerefeldvektor oberhalb der Messrohrlängsachse. Diese Ausgestaltung berücksichtigt, dass in Medien, die unterschiedliche Phasen aufweisen, die Gasphase oben strömt. Durch die Anordnung der Schallmessebene oberhalb der Messrohrlängsachse kann damit gewährleistet werden, dass hauptsächlich die Gasphase des strömenden Mediums vermessen wird.

Erfindungsgemäß wird die eingangs dargelegte Aufgabe durch ein eingangs genanntes Verfahren zum Betreiben eines Ultraschall-Durchflussmessgeräts dadurch gelöst, dass ein Medium mit wenigstens einer flüssigen und einer gasförmigen Phase durch das Messrohr geströmt wird,

dass eine erste Schallgeschwindigkeit eines ersten Messsignals über die Schallmessstrecke der ersten Ultraschallmesseinrichtung bestimmt und der gasförmigen Phase zugeordnet wird, falls die erste Schallgeschwindigkeit unterhalb einer Grenzschallgeschwindigkeit liegt,
dass eine zweite Schallgeschwindigkeit eines zweiten Messsignals über die Schallmessstrecke der zweiten Ultraschallmesseinrichtung bestimmt und der gasförmigen Phase zugeordnet wird, falls die zweite Schallgeschwindigkeit unterhalb einer Grenzschallgeschwindigkeit liegt,
dass, falls mindestens eine der Schallgeschwindigkeiten der gasförmigen Phase zugeordnet ist, aus der mindestens einen Schallgeschwindigkeit eine Strömungsgeschwindigkeit der gasförmigen Phase bestimmt wird.

Vorzugsweise wird die Grenzschallgeschwindigkeit derart festgelegt, dass die Grenzschallgeschwindigkeit zwischen der Schallgeschwindigkeit von Gasen und der Schallgeschwindigkeit von Flüssigkeiten liegt. Die Grenzschallgeschwindigkeit kann vor der Vermessung eines neuen Mediums, in Abhängigkeit von der Zusammensetzung des Mediums neu festgelegt werden.

Durch den Vergleich der ersten und der zweiten gemessenen Schallgeschwindigkeit mit der Grenzschallgeschwindigkeit kann gewährleistet werden, dass nur die Strömungsgeschwindigkeit der gasförmigen Phase bestimmt wird. Damit eignet sich das erfindungsgemäße Verfahren für die zuverlässige Bestimmung der Strömungsgeschwindigkeit der Gasphase in mehrphasigen Medien.

Gemäß einer Ausgestaltung des Verfahrens zum Betreiben eines Ultraschall-Durchflussmessgeräts wird aus beiden Schallgeschwindigkeiten die Strömungsgeschwindigkeit bestimmt, falls beide Schallgeschwindigkeiten der gasförmigen Phase zugeordnet sind.

Beispielsweise kann eine erste Strömungsgeschwindigkeit aus der ersten Schallgeschwindigkeit und eine zweite Strömungsgeschwindigkeit aus der zweiten Schallgeschwindigkeit bestimmt werden. Anschließend können optional die beiden Strömungsgeschwindigkeiten gemittelt werden. Alternativ können auch zuvor die erste Schallgeschwindigkeit und die zweite Schallgeschwindigkeit gemittelt werden und anschließend aus dem Mittelwert die Strömungsgeschwindigkeit bestimmt werden. Alternativ können auch die separat bestimmten Strömungsgeschwindigkeiten und/oder die Schallgeschwindigkeiten durch eine andere Operation miteinander verglichen und/oder verknüpft werden.

Ebenfalls denkbar ist es, die Schallgeschwindigkeiten und/oder die Strömungsgeschwindigkeiten über einen definierten Zeitraum zu messen und anschließend die Werte über diesen definierten Zeitraum zu mitteln.

Die so bestimmte Strömungsgeschwindigkeit der Gasphase des mehrphasigen Mediums kann beispielsweise über eine Anzeigeeinheit und/oder über eine Schnittstelle ausgegeben werden und/oder in einer Speichereinheit hinterlegt werden.

Gemäß einer nächsten Ausgestaltung wird das Verfahren zum Betreiben eines Ultraschall-Durchflussmessgerätes ein erstes und ein zweites Mal ausgeführt,

wobei während der ersten Ausführung wenigstens eine Schallgeschwindigkeit der gasförmigen Phase zugeordnet wird,

wobei während der zweiten Ausführung keine der Schallgeschwindigkeiten der gasförmigen Phase zugeordnet wird und

wobei eine Strömungsgeschwindigkeit der gasförmigen Phase aus der mindestens einen Schallgeschwindigkeit aus der ersten Ausführung bestimmt wird.

Diese Ausgestaltung des Verfahrens gewährleistet, dass sofern beispielsweise die flüssige Phase des mehrphasigen Mediums sämtliche Ultraschallwandler zeitweise verdeckt, sodass die Strömungsgeschwindigkeit der gasförmigen Phase zeitweise nicht gemessen werden kann, dass dann der Wert der Strömungsgeschwindigkeit aus der zuvor gemessenen Schallgeschwindigkeit bestimmt wird. Insofern können kurzzeitige Blockierungen beider Ultraschallmesseinrichtungen beispielsweise bei dem Auftreten von Flüssigkeitsschwallen durch die Steuerungseinrichtung überbrückt werden.

Gemäß einer Ausgestaltung wird ein Zeitintervall und/oder eine Anzahl an Messungen festgelegt, innerhalb dessen die Strömungsgeschwindigkeit den zuletzt gemessenen Wert beibehält, bzw. aus der zuletzt bestimmten Schallgeschwindigkeit berechnet wird, sofern weder das erste noch das zweite Messsignal der gasförmigen Phase zugeordnet wird. Erst danach meldet vorzugsweise die Steuerungseinrichtung, dass keine Gasphase messbar ist, beispielsweise dadurch, dass der Wert der Strömungsgeschwindigkeit auf 0 gesetzt wird.

Gemäß einer weiteren Ausgestaltung wird unter Verwendung wenigstens einer Eigenschaft des ersten und/oder des zweiten Messsignals eine Information über das Strömungsregime bestimmt. Im Detail bedeutet dies, dass wenigstens eine Eigenschaft des ersten und/oder des zweiten Messsignals auf ein turbulentes oder laminares Strömungsprofil hindeutet. Eine solche Eigenschaft eines Messsignals ist beispielsweise die Amplitude des Messsignals bzw. die Abschwächung der Signalamplitude beim Durchgang durch das Medium und/oder die Phase des Messsignals und/oder die zeitliche Änderung der Schallgeschwindigkeit und/oder das Signal zu Rausch - Verhältnis des Messsignals.

Gemäß einer Ausgestaltung des Verfahrens kann die Eigenschaft des ersten und/oder des zweiten Messsignals unabhängig davon ausgewertet werden, ob die Schallgeschwindigkeit des ersten und/oder des zweiten Messsignals einer gasförmigen Phase zugeordnet wird.

Alternativ wird die Eigenschaft des ersten und/oder des zweiten Messsignals nur dann ausgewertet, wenn die Schallgeschwindigkeit einer gasförmigen Phase zugeordnet wird.

Gemäß einer nächsten Ausgestaltung wird unter Verwendung der ersten und/oder zweiten Schallgeschwindigkeit das Vorhandensein von Schwallen im Messrohr bestimmt.

Beispielsweise kann die Häufigkeit des Blockierens der ersten und/oder der zweiten Ultraschallmesseinrichtung durch eine flüssige Phase ausgewertet werden.

Zudem kann durch einen Vergleich der Häufigkeit der Blockierung der ersten Ultraschallmesseinrichtung und der Häufigkeit der Blockierung der zweiten Ultraschallmesseinrichtung eine weitergehende Information über die räumliche Verteilung der Schwallen, also der Flüssigkeitswellen, gewonnen werden.

Sämtliche weiteren Informationen über das Medium können ebenfalls über eine Anzeigeeinheit und/oder über eine Schnittstelle ausgegeben werden und/oder in einer Speichereinheit hinterlegt werden.

Zudem kann aus der Schallgeschwindigkeit des ersten und/oder des zweiten Messsignals eine Information über die Zusammensetzung der gasförmigen Phase bestimmt werden. Sind insbesondere die Betriebsparameter, wie beispielsweise Druck und/oder Temperatur innerhalb des Messrohrs bekannt, kann aus der gemessenen Größe der Schallgeschwindigkeit auf die Bestandteile der Gasphase geschlossen werden.

Erfindungsgemäß wird die eingangs dargelegte Aufgabe durch einen eingangs genannten Messverbund mit einem Ultraschall-Durchflussmessgerät und einem Mehrphasendurchflussmessgerät dadurch gelöst, dass das Ultraschall-Durchflussmessgerät nach einer der zuvor beschriebenen Ausgestaltungen ausgebildet ist. In Bezug auf die jeweiligen Vorteile der einzelnen Ausgestaltungen wird auf die obigen Ausführungen verwiesen.

Durch den erfindungsgemäßen Messverbund, in dem das Ultraschall-Durchflussmessgerät derart ausgebildet ist, dass es insbesondere die Strömungsgeschwindigkeit einer Phase, insbesondere der Gasphase eines mehrphasigen Mediums zuverlässig erfasst, kann insgesamt der Anwendungsbereich des Mehrphasendurchflussmessgerätes bzw. eines solchen Verbundes erweitert werden und/oder die Messgenauigkeit erhöht werden. Insbesondere kann ein solcher Verbund auch unter für das Mehrphasendurchflussmessgerät extremen Bedingungen eingesetzt werden. Solche Bedingungen sind beispielsweise besonders hohe Strömungsgeschwindigkeiten oder ein hoher Druck innerhalb des Messrohrs.

Gemäß einer vorteilhaften Weiterbildung ist das Mehrphasendurchflussmessgerät ein kernmagnetisches Durchflussmessgerät.

Alternativ kann das Mehrphasendurchflussmessgerät ebenfalls als Ultraschall-Durchflussmessgerät ausgebildet sein, das durch die Anordnung der Ultraschallwandler beispielsweise für den Nachweis bzw. die Bestimmung der Strömungsgeschwindigkeit der flüssigen Phase eines mehrphasigen Mediums ausgebildet ist.

Gemäß einer Ausgestaltung des Messverbunds ist das Ultraschall-Durchflussmessgerät stromabwärts vom Mehrphasendurchflussmessgerät angeordnet.

Alternativ kann das Ultraschall-Durchflussmessgerät auch in Strömungsrichtung gesehen vor dem Mehrphasendurchflussmessgerät angeordnet sein. Sind das Ultraschall-Durchflussmessgerät und das Mehrphasendurchflussmessgerät hintereinander angeordnet, so können die Durchmesser der jeweiligen Messrohre voneinander abweichen.

Denkbar ist ebenfalls, dass das Ultraschall-Durchflussmessgerät und das Mehrphasendurchflussmessgerät auf einem Teilbereich des Messrohrs kombiniert angeordnet sind.

Gemäß einer weiteren Ausgestaltung weist der Messverbund eine zentrale Recheneinheit auf, die Messergebnisse des Mehrphasendurchflussmessgeräts und des Ultraschall-Durchflussmessgerätes auswertet. Eine solche zentrale Recheneinheit kann in dem Mehrphasendurchflussmessgerät oder in dem Ultraschall-Durchflussmessgerät integriert sein oder als separate Recheneinheit ausgebildet sein.

Erfindungsgemäß wird die eingangs genannte Aufgabe durch ein Verfahren zum Betreiben eines zuvor beschriebenen Messverbunds dadurch gelöst, dass von dem Mehrphasendurchflussmessgerät ein Anteil der flüssigen Phase und optional eine Strömungsgeschwindigkeit der gasförmigen Phase bestimmt werden,

> dass von dem Ultraschall-Durchflussmessgerät eine Strömungsgeschwindigkeit der gasförmigen Phase bestimmt wird,
> dass unter Verwendung des Anteils der flüssigen Phase der Anteil der gasförmigen Phase bestimmt wird,
> dass, falls die vom Ultraschall-Durchflussmessgerät bestimmte Strömungsgeschwindigkeit der gasförmigen Phase oberhalb einer Grenzströmungsgeschwindigkeit liegt, der Durchfluss, insbesondere der Volumendurchfluss und/oder der Massedurchfluss, der gasförmigen Phase unter Verwendung der von dem Ultraschall-Durchflussmessgerät bestimmten Strömungsgeschwindigkeit der gasförmigen Phase und von dem Anteil der gasförmigen Phase bestimmt wird.

Erfindungsgemäß werden die Messergebnisse unterschiedlicher Messgeräte miteinander verknüpft, um weitere Eigenschaften des strömenden Mediums bestimmen zu können. Vorliegend ermöglicht das erfindungsgemäße Verfahren im Detail, den Durchfluss der Gasphase eines mehrphasigen Mediums auch unter schwierigen Bedingungen, wie beispielsweise sehr hohen Strömungsgeschwindigkeiten, verlässlich zu bestimmen. Dies ist weder durch das Mehrphasendurchflussmessgerät noch durch das Ultraschall-Durchflussmessgerät alleine möglich.

Die Grenzströmungsgeschwindigkeit der gasförmigen Phase wird vorzugsweise unter Berücksichtigung des Messbereiches des Mehrphasendurchflussmessgerätes und/oder des nachzuweisenden Mediums festgelegt.

Insofern wird erfindungsgemäß ausgehend von dem Anteil der gasförmigen Phase am Gesamtdurchfluss und der von dem Mehrphasendurchflussmessgerät und/oder dem Ultraschall-Durchflussmessgerät bestimmten Strömungsgeschwindigkeit der Gasphase der Durchfluss, also der Volumendurchfluss oder der Massedurchfluss, der gasförmigen Phase bestimmt.

Beispielsweise wird zur Bestimmung des Durchflusses der gasförmigen Phase die folgende Formel verwendet:

$$Q_{gas} = A \cdot (1-\alpha) \cdot v_{gas},$$

dabei ist A der Messrohrquerschnitt, $\alpha$ der Anteil der flüssigen Phase, der durch das Mehrphasendurchflussmessgerät bestimmt wird und $v_{gas}$ die Strömungsgeschwindigkeit der gasförmigen Phase.

Bei der Bestimmung des Anteils der flüssigen Phase und/oder des Anteils der gasförmigen Phase und/oder des Durchflusses der gasförmigen Phase können gemäß einer bevorzugten Ausgestaltung ebenfalls die von dem Ultraschall-Durchflussmessgerät bestimmten weiteren Eigenschaften des Mediums, wie oben beschrieben, berücksichtigt werden.

Eine weitere Ausgestaltung des Verfahrens zum Betreiben eines Messverbundes zeichnet sich dadurch aus, dass, falls die vom Ultraschall-Durchflussmessgerät bestimmte Strömungsgeschwindigkeit der gasförmigen Phase unterhalb der Grenzströmungsgeschwindigkeit liegt, der Durchfluss der gasförmigen Phase unter Verwendung der vom Mehrphasendurchflussmessgerät bestimmten Strömungsgeschwindigkeit der gasförmigen Phase und von dem Anteil der gasförmigen Phase bestimmt wird.

Eine nächste Ausgestaltung des Verfahrens ist dadurch gekennzeichnet, dass, falls die vom Ultraschall-Durchflussmessgerät bestimmte Strömungsgeschwindigkeit der gasförmigen Phase unterhalb der Grenzströmungsgeschwindigkeit liegt, der Durchfluss der gasförmigen Phase unter Verwendung der vom Ultraschall-Durchflussmessgerät und vom Mehrphasendurchflussmessgerät bestimmten Strömungsgeschwindigkeiten der gasförmigen Phase und von dem Anteil der gasförmigen Phase bestimmt wird.

Gemäß einer weiteren Ausgestaltung des Verfahrens wird der Druck innerhalb des Mehrphasendurchflussmessgerätes bestimmt und der Durchfluss der gasförmigen Phase wird zumindest unter Verwendung der von dem Ultraschall-Durchflussmessgerät bestimmten Strömungsgeschwindigkeit der gasförmigen Phase bestimmt, wenn der Druck innerhalb des Mehrphasendurchflussmessgerätes einen Druckgrenzwert überschreitet.

Gemäß dieser Ausgestaltung wird die von dem Ultraschall-Durchflussmessgerät bestimmte Strömungsgeschwindigkeit nicht nur bei sehr schnellen Gasgeschwindigkeiten sondern auch bei hohen Drücken zur Bestimmung der Strömungsgeschwindigkeit bzw. des Durchflusses der gasförmigen Phase verwendet.

Neben der Gasgeschwindigkeit und dem Druck innerhalb des Mehrphasendurchflussmessgerätes kann die Verwendung der Messwerte des Ultraschall-Durchflussmessgeräts auch von anderen Betriebsparametern, wie beispielsweise der Temperatur abhängen. Zudem kann die von dem Ultraschall-Durchflussmessgerät gemessene Strömungsgeschwindigkeit der Gasphase auch kontinuierlich an das Mehrphasendurchflussmessgerät und/oder eine zentrale Recheneinheit zur Bestimmung des Durchflusses der gasförmigen Phase gesendet werden.

Gemäß einer weiteren vorteilhaften Ausgestaltung führt das Ultraschall-Durchflussmessgerät eines der zuvor beschriebenen Verfahren aus.

Im Ergebnis kann durch den erfindungsgemäßen Messverbund der Nachweis eines durch ein Messrohr strömenden mehrphasigen Mediums verbessert werden.

Im Einzelnen gibt es nun eine Vielzahl von Möglichkeiten, das erfindungsgemäße Ultraschall-Durchflussmessgerät, das Verfahren zum Betreiben eines Ultraschall-Durchflussmessgeräts, den erfindungsgemäßen Messverbund und das Verfahren zum Betreiben eines Messverbunds auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen

Fig. 1　　ein erstes Ausführungsbeispiel eines erfindungsgemäßen Ultraschall-Durchflussmessgerätes,

Fig. 2　　das erste Ausführungsbeispiel eines erfindungsgemäßen Ultraschall-Durchflussmessgerätes im Querschnitt von oben,

Fig. 3　　ein erstes Ausführungsbeispiel eines erfindungsgemäßen Verfahrens zum Betreiben eines Ultraschall-Durchflussmessgerätes,

Fig. 4　　ein schematisches erstes Ausführungsbeispiel eines erfindungsgemäßen Messverbunds,

Fig. 5　　ein zweites Ausführungsbeispiel eines Messverbunds und

Fig. 6　　ein erstes Ausführungsbeispiel eines erfindungsgemäßen Verfahrens zum Betreiben eines Messverbunds.

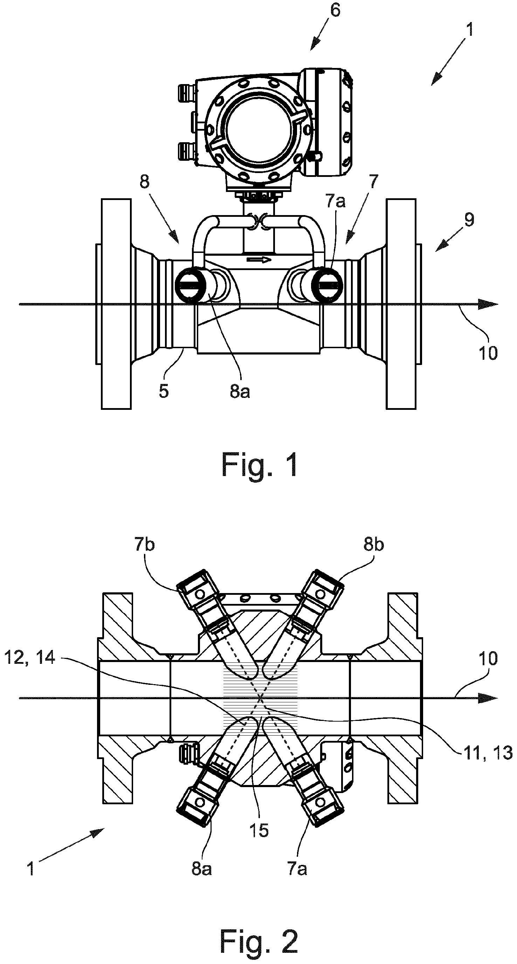

In Fig. 1 ist dargestellt ein erstes Ausführungsbeispiel eines Ultraschall-Durchflussmessgeräts 1 mit einem Messrohr 5, mit einer Steuerungseinrichtung 6 und mit einer ersten Ultraschallmesseinrichtung 7 und mit einer zweiten Ultraschallmesseinrichtung 8.

Das Messrohr 5 weist einen Messrohrinnenraum 9 und eine Messrohrlängsachse 10 auf, wobei die Messrohrlängsachse 10 durch die Mitte des Messrohrquerschnittes verläuft.

Die erste Ultraschallmesseinrichtung 7 weist einen ersten Ultraschallwandler 7a und einen zweiten Ultraschallwandler 7b, der in der Darstellung verdeckt ist, auf. Die zweite Ultraschallmesseinrichtung 8 weist einen ersten Ultraschallwandler 8a und einen zweiten Ultraschallwandler 8b, der in der Darstellung ebenfalls verdeckt ist, auf. Die genaue Anordnung der Ultraschallwandler 7a, 8a, 7b, 8b ist Fig. 2 zu entnehmen.

Fig. 1 zeigt weiterhin, dass die Ultraschallwandler 7a, 8a, 7b, 8b oberhalb der Messrohrlängsachse 10 angeordnet sind, sodass sich das dargestellte Ultraschall-Durchflussmessgerät besonders für den zuverlässigen Nachweis bzw. die Bestimmung der Strömungsgeschwindigkeit einer Gasphase eines mehrphasigen Mediums eignet.

In Fig. 2 ist das erste Ausführungsbeispiel des Ultraschall-Durchflussmessgeräts 1 in einem Querschnitt von oben dargestellt.

Der erste Ultraschallwandler 7a und der zweite Ultraschallwandler 7b der ersten Ultraschallmesseinrichtung 7 spannen eine erste Schallmessstrecke 11 mit einer ersten Schallachse 13 auf.

Der erste Ultraschallwandler 8a und der zweite Ultraschallwandler 8b der zweiten Ultraschallmesseinrichtung 8 spannen eine zweite Schallmessstrecke 12 mit einer zweiten Schallachse 14 auf.

Die Schallachse 13 der ersten Ultraschallmesseinrichtung 7 und die Schallachse 14 der zweiten Ultraschallmesseinrichtung 8 spannen zusammen eine Schallmessebene 15 auf, die im dargestellten Ausführungsbeispiel parallel zur Messrohrlängsachse 10 verläuft.

Dadurch, dass die Schallmessebene 15 parallel zur Messrohrlängsachse 10 ausgerichtet ist, kann gewährleistet werden, dass bei der Vermessung eines mehrphasigen Mediums redundant dieselbe Phase, vorzugsweise die Gasphase vermessen wird.

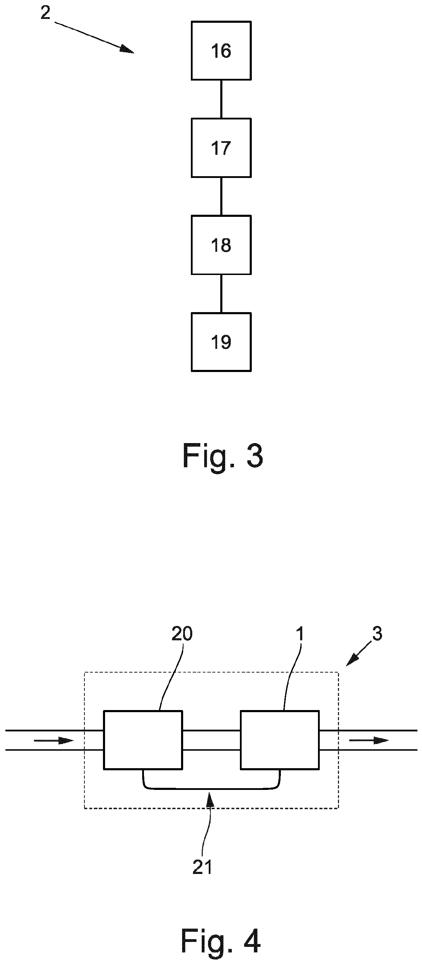

In Fig. 3 ist ein erstes Ausführungsbeispiel eines Verfahrens 2 zum Betreiben eines Ultraschall-Durchflussmessgeräts 1 dargestellt.

In einem ersten Schritt 16 wird eine erste Schallgeschwindigkeit eines ersten Messsignals über die Schallmessstrecke 11 der ersten Ultraschallmesseinrichtung 7 bestimmt und der gasförmigen Phase zugeordnet, falls die erste Schallgeschwindigkeit unterhalb einer Grenzschallgeschwindigkeit liegt.

In einem zweiten Schritt 17 wird eine zweite Schallgeschwindigkeit eines zweiten Messsignals über die Schallmessstrecke 12 der zweiten Ultraschallmesseinrichtung 8 bestimmt und der gasförmigen Phase zugeordnet, falls die zweite Schallgeschwindigkeit unterhalb einer Grenzschallgeschwindigkeit liegt.

In einem nächsten Schritt 18 wird, falls mindestens eine der Schallgeschwindigkeiten der gasförmigen Phase zugeordnet ist, aus der mindestens einen Schallgeschwindigkeit eine Strömungsgeschwindigkeit der gasförmigen Phase bestimmt.

Die Strömungsgeschwindigkeit oder die Strömungsgeschwindigkeiten wird bzw. werden anschließend über eine Anzeigeeinheit oder eine Schnittstelle zur weiteren Auswertung ausgegeben 19.

In Fig. 4 ist schematisch ein erstes Ausführungsbeispiel eines Messverbunds 3 aus einem Mehrphasendurchflussmessgerät 20 und einem Ultraschall-Durchflussmessgerät 1 dargestellt, wobei das Ultraschall-Durchflussmessgerät 1 in Strömungsrichtung gesehen hinter dem Mehrphasendurchflussmessgerät 20 angeordnet ist.

Das Mehrphasendurchflussmessgerät 20 ist mit dem Ultraschall-Durchflussmessgerät 1 über ein vorzugsweise drahtloses Kommunikationssystem 21 verbunden, sodass die Messgeräte 20, 1 beispielsweise Messwerte zur weiteren Verarbeitung austauschen können. Hierdurch kann einerseits der Anwendungsbereich der Messgeräte 1, 20 erweitert werden und andererseits können mehr Informationen über das zu vermessende Medium bestimmt werden.

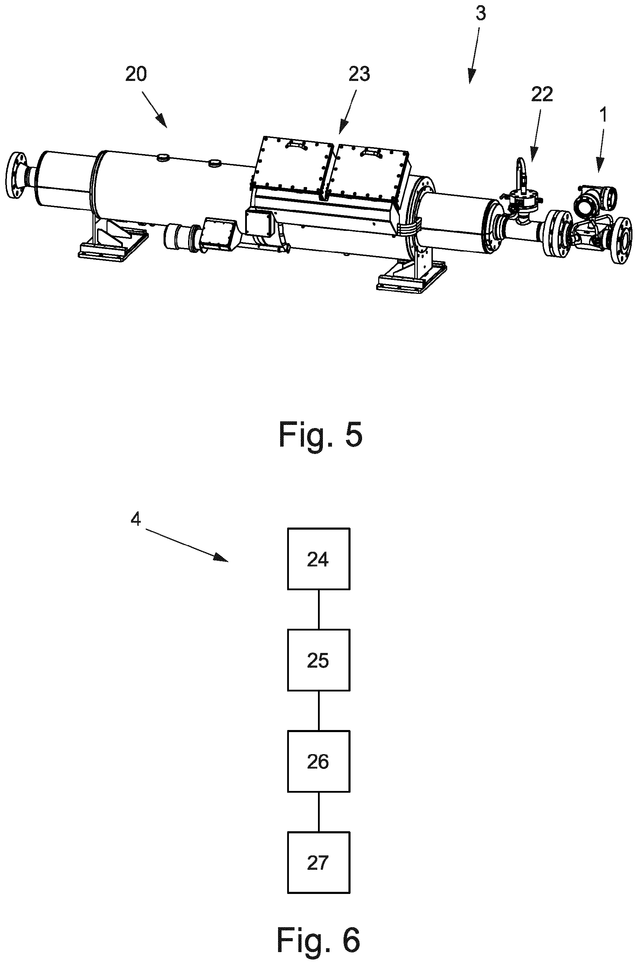

In dem in Fig. 5 dargestellten Messverbund 3 ist das Mehrphasendurchflussmessgerät 20 als kernmagnetisches Durchflussmessgerät ausgebildet. Zudem ist ein Druckmessgerät 22 zur Erfassung des Drucks innerhalb des Messrohrs vorhanden. Im Betrieb des Messverbundes 3 wird die von dem Ultraschall-Durchflussmessgerät 1 bestimmte Strömungsgeschwindigkeit der gasförmigen Phase des Mediums an die Steuerungseinrichtung 23 des kernmagnetischen Durchflussmessgerätes übertragen und weiterverarbeitet, wenn die Gasgeschwindigkeit besonders hoch ist und/oder wenn der von dem Druckmessgerät 22 gemessene Druck besonders hoch ist.

In Fig. 6 ist ein erstes Ausführungsbeispiel eines Verfahrens 4 zum Betreiben eines Messverbunds 3 dargestellt.

Von dem Mehrphasendurchflussmessgerät 20 wird in einem ersten Schritt 24 ein Anteil der flüssigen Phase am Gesamtfluss bestimmt.

In einem nächsten Schritt 25, der auch gleichzeitig stattfinden kann, wird von dem Ultraschall-Durchflussmessgerät 1 eine Strömungsgeschwindigkeit der gasförmigen Phase bestimmt.

In einem nächsten Schritt 26 wird unter Verwendung des Anteils der flüssigen Phase der Anteil der gasförmigen Phase am Gesamtfluss bestimmt.

Zuletzt wird, falls die vom Ultraschall-Durchflussmessgerät 1 bestimmte Strömungsgeschwindigkeit der gasförmigen Phase oberhalb einer Grenzströmungsgeschwindigkeit liegt, der Durchfluss der gasförmigen Phase unter Verwendung der von dem Ultraschall-Durchflussmessgerät 1 bestimmten Strömungsgeschwindigkeit der gasförmigen Phase und von dem Anteil der gasförmigen Phase bestimmt 27.

Im Ergebnis kann durch dieses Verfahren zuverlässig die Durchfluss der gasförmigen Phase eines mehrphasigen Mediums auch unter kritischen Bedingungen bestimmt werden.

Bezugszeichen

| 1 | Ultraschall-Durchflussmessgerät |
|---|---|
| 2 | Verfahren zum Betreiben eines Ultraschall-Durchflussmessgeräts |
| 3 | Messverbund |
| 4 | Verfahren zum Betreiben eines Messverbunds |
| 5 | Messrohr |
| 6 | Steuerungseinrichtung |
| 7 | erste Ultraschallmesseinrichtung |
| 7a | erster Ultraschallwandler |
| 7b | zweiter Ultraschallwandler |
| 8 | zweite Ultraschallmesseinrichtung |
| 8a | erster Ultraschallwandler |
| 8b | zweiter Ultraschallwandler |
| 9 | Messrohrinnenraum |
| 10 | Messrohrlängsachse |
| 11 | Schallmessstrecke der ersten Ultraschallmesseinrichtung |
| 12 | Schallmessstrecke der zweiten Ultraschallmesseinrichtung |
| 13 | Schallachse der ersten Ultraschallmesseinrichtung |
| 14 | Schallachse der zweiten Ultraschallmesseinrichtung |
| 15 | Schallmessebene |
| 16 | Bestimmung einer ersten Schallgeschwindigkeit |
| 17 | Bestimmung einer zweiten Schallgeschwindigkeit |
| 18 | Bestimmung einer Strömungsgeschwindigkeit |
| 19 | Ausgabe bzw. Weiterleitung der Strömungsgeschwindigkeit |
| 20 | Mehrphasendurchflussmessgerät |
| 21 | Kommunikationssystem |
| 22 | Druckmessgerät |
| 23 | Steuerungseinrichtung des kernmagnetischen Durchflussmessgeräts |
| 24 | Bestimmung des Anteils der flüssigen Phase am Gesamtfluss durch das Mehrphasendurchflussmessgerät |
| 25 | Bestimmung der Strömungsgeschwindigkeit der gasförmigen Phase durch das Ultraschalldurchflussmessgerät |
| 26 | Bestimmung des Anteils der gasförmigen Phase am Gesamtfluss |
| 27 | Bestimmung des Durchflusses der gasförmigen Phase |

**Patentansprüche**

1. Ultraschall-Durchflussmessgerät (1) mit einem Messrohr (5), einer Steuerungseinrichtung (6) und mindestens einer ersten Ultraschallmesseinrichtung (7) und einer zweiten Ultraschallmesseinrichtung (8),

   wobei das Messrohr (5) einen Messrohrinnenraum (9) und eine Messrohrlängsachse (10) aufweist,

   wobei jede der Ultraschallmesseinrichtungen (7, 8) am Messrohr (5) angeordnet ist, wobei jede Ultraschallmesseinrichtung (7, 8) einen ersten Ultraschallwandler (7a, 8a) und einen zweiten Ultraschallwandler (7b, 8b) aufweist, wobei der erste (7a, 8a) und der zweite Ultraschallwandler (7b, 8b) jeder Ultraschallmesseinrichtung (7, 8) eine Schallmessstrecke (11, 12) mit einer Schallachse (13, 14) aufspannen und die Schallmessstrecke (11, 12) und die Schallachse (13, 14) den Messrohrinnenraum (9) durchdringen,

   wobei die Steuerungseinrichtung (6) zur Durchführung von Ultraschallmessungen mit den Ultraschallmesseinrichtungen (7, 8) ausgebildet ist,

   wobei die Schallachse (13) der ersten Ultraschallmesseinrichtung (7) und die Schallachse (14) der zweiten Ultraschallmesseinrichtung (8) eine Schallmessebene (15) aufspannen, die im Wesentlichen parallel zur Messrohrlängsachse (10) verläuft,

   **dadurch gekennzeichnet,**

   **dass** das Ultraschall-Durchflussmessgerät (1) zur Durchführung eines Verfahrens (2) nach einem der Ansprüche 4 bis 9 ausgebildet ist.

2. Ultraschall-Durchflussmessgerät (1) nach Anspruch 1, **dadurch gekennzeichnet, dass** die Schallachse der ersten Ultraschallmesseinrichtung und die Schallachse der zweiten Ultraschallmesseinrichtung einander kreuzen.

3. Ultraschall-Durchflussmessgerät (1) nach Anspruch 1 oder 2, **dadurch gekennzeichnet, dass** die Schallmessebene in Bezug auf den Erdschwerefeldvektor oberhalb der Messrohrlängsachse liegt.

4. Verfahren (2) zum Betreiben eines Ultraschall-Durchflussmessgeräts (1) mit einem Messrohr (5), einer Steuerungseinrichtung (6) und mindestens einer ersten Ultraschallmesseinrichtung (7) und einer zweiten Ultraschallmesseinrichtung (8), wobei das Messrohr (5) einen Messrohrinnenraum (9) und eine Messrohrlängsachse (10) aufweist, wobei jede der Ultraschallmesseinrichtungen (7, 8) am Messrohr (5) angeordnet ist, wobei jede Ultraschallmesseinrichtung (7, 8) einen ersten Ultraschallwandler (7a, 8a) und einen zweiten Ultraschallwandler (7b, 8b) aufweist, wobei der erste (7a, 8a) und der zweite Ultraschallwandler (7b, 8b) jeder Ultraschallmesseinrichtung (7, 8) eine Schallmessstrecke (11, 12) mit einer Schallachse (13, 14) aufspannen und die Schallmessstrecke (11, 12) und die Schallachse (13, 14) den Messrohrinnenraum (9) durchdringen, wobei die Steuerungseinrichtung (6) zur Durchführung von Ultraschallmessungen mit den Ultraschallmesseinrichtungen (7, 8) ausgebildet ist, wobei die Schallachse (13) der ersten Ultraschallmesseinrichtung (7) und die Schallachse (14) der zweiten Ultraschallmesseinrichtung (8) eine Schallmessebene (15) aufspannen, die im Wesentlichen parallel zur Messrohrlängsachse (10) verläuft,

   wobei ein Medium mit wenigstens einer flüssigen und einer gasförmigen Phase durch das Messrohr (5) geströmt wird,

   **dadurch gekennzeichnet,**

   **dass** eine erste Schallgeschwindigkeit eines ersten Messsignals über die Schallmessstrecke der ersten Ultraschallmesseinrichtung bestimmt (16) und der gasförmigen Phase zugeordnet wird, falls die erste Schallgeschwindigkeit unterhalb einer Grenzschallgeschwindigkeit liegt,

   **dass** eine zweite Schallgeschwindigkeit eines zweiten Messsignals über die Schallmessstrecke der zweiten Ultraschallmesseinrichtung bestimmt (17) und der gasförmigen Phase zugeordnet wird, falls die zweite Schallgeschwindigkeit unterhalb einer Grenzschallgeschwindigkeit liegt,

   **dass**, falls mindestens eine der Schallgeschwindigkeiten der gasförmigen Phase zugeordnet ist, aus der mindestens einen Schallgeschwindigkeit eine Strömungsgeschwindigkeit der gasförmigen Phase bestimmt wird (18).

5. Verfahren (2) nach Anspruch 4, **dadurch gekennzeichnet, dass**, falls beide Schallgeschwindigkeiten der gasförmigen Phase zugeordnet sind, aus beiden Schallgeschwindigkeiten die Strömungsgeschwindigkeit bestimmt wird.

6. Verfahren (2) nach einem der Ansprüche 4 oder 5, **dadurch gekennzeichnet, dass** das Verfahren ein erstes und ein zweites Mal ausgeführt wird,

   dass während der ersten Ausführung wenigstens eine Schallgeschwindigkeit der gasförmigen Phase zugeordnet wird,

   dass während der zweiten Ausführung keine der Schallgeschwindigkeiten der gasförmigen Phase zugeordnet wird und

   dass eine Strömungsgeschwindigkeit der gasförmigen Phase aus der mindestens einen Schallgeschwindigkeit aus der ersten Ausführung bestimmt wird.

7. Verfahren (2) nach einem der Ansprüche 4 bis 6, **dadurch gekennzeichnet, dass** unter Verwendung wenigstens einer Eigenschaft des ersten und/oder des zweiten Messsignals eine Information über das Strömungsregime bestimmt wird.

8. Verfahren (2) nach einem der Ansprüche 4 bis 7, **dadurch gekennzeichnet, dass** unter Verwendung der ersten und/oder zweiten Schallgeschwindigkeit das Vorhandensein von Schwallen im Messrohr (5) bestimmt wird.

9. Verfahren (2) nach einem der Ansprüche 4 bis 8, **dadurch gekennzeichnet, dass** aus der Schallgeschwindigkeit des ersten und/oder des zweiten Messsignals eine Information über die Zusammensetzung der gasförmigen Phase bestimmt wird.

10. Messverbund (3) mit einem Ultraschall-Durchflussmessgerät (1) und einem Mehrphasendurchflussmessgerät (20),
**dadurch gekennzeichnet,**
**dass** das Ultraschall-Durchflussmessgerät (1) nach einem der Ansprüche 1 bis 3 zur Durchführung eines Verfahrens nach einem der Ansprüche 4 bis 9 ausgebildet ist.

11. Messverbund (3) nach Anspruch 10, **dadurch gekennzeichnet, dass** das Mehrphasendurchflussmessgerät (20) ein kernmagnetisches Durchflussmessgerät ist.

12. Messverbund (3) nach Anspruch 10 oder 11, **dadurch gekennzeichnet, dass** Ultraschall-Durchflussmessgerät (1) stromabwärts vom Mehrphasendurchflussmessgerät (20) angeordnet ist.

13. Verfahren (4) zum Betreiben eines Messverbunds (3) nach einem der Ansprüche 10 bis 12, **dadurch gekennzeichnet,**

**dass** von dem Mehrphasendurchflussmessgerät (20) ein Anteil der flüssigen Phase und optional eine Strömungsgeschwindigkeit der gasförmigen Phase bestimmt werden (24),
**dass** von dem Ultraschall-Durchflussmessgerät (1) eine Strömungsgeschwindigkeit der gasförmigen Phase bestimmt wird (25), wobei von dem Ultraschall-Durchflussmessgerät (1) ein Verfahren nach einem der Ansprüche 4 bis 9 ausgeführt wird,
**dass** unter Verwendung des Anteils der flüssigen Phase der Anteil der gasförmigen Phase bestimmt wird (26),
**dass**, falls die vom Ultraschall-Durchflussmessgerät bestimmte Strömungsgeschwindigkeit der gasförmigen Phase oberhalb einer Grenzströmungsgeschwindigkeit liegt, der Durchfluss der gasförmigen Phase unter Verwendung der von dem Ultraschall-Durchflussmessgerät bestimmten Strömungsgeschwindigkeit der gasförmigen Phase und von dem Anteil der gasförmigen Phase bestimmt wird (27).

14. Verfahren (4) nach Anspruch 13, **dadurch gekennzeichnet, dass**, falls die vom Ultraschall-Durchflussmessgerät (1) bestimmte Strömungsgeschwindigkeit der gasförmigen Phase unterhalb der Grenzströmungsgeschwindigkeit liegt, der Durchfluss der gasförmigen Phase unter Verwendung der vom Mehrphasendurchflussmessgerät (20) bestimmten Strömungsgeschwindigkeit der gasförmigen Phase und von dem Anteil der gasförmigen Phase bestimmt wird.

15. Verfahren (4) nach Anspruch 13, **dadurch gekennzeichnet, dass**, falls die vom Ultraschall-Durchflussmessgerät (1) bestimmte Strömungsgeschwindigkeit der gasförmigen Phase unterhalb der Grenzströmungsgeschwindigkeit liegt, der Durchfluss der gasförmigen Phase unter Verwendung der vom Ultraschall-Durchflussmessgerät (1) und vom Mehrphasendurchflussmessgerät (20) bestimmten Strömungsgeschwindigkeiten der gasförmigen Phase und von dem Anteil der gasförmigen Phase bestimmt wird.

16. Verfahren (4) nach einem der Ansprüche 13 bis 15, **dadurch gekennzeichnet, dass** der Druck innerhalb des Mehrphasendurchflussmessgerätes (20) bestimmt wird und
dass der Durchfluss der gasförmigen Phase zumindest unter Verwendung der von dem Ultraschall-Durchflussmessgerät (1) bestimmten Strömungsgeschwindigkeit der gasförmigen Phase bestimmt wird, wenn der Druck innerhalb des Mehrphasendurchflussmessgerätes (20) einen Druckgrenzwert überschreitet.

## Claims

1. Ultrasonic flowmeter (1) with a measuring tube (5), a control device (6) and at least a first ultrasonic measuring device (7) and a second ultrasonic measuring device (8),

wherein the measuring tube (5) has a measuring tube interior (9) and a measuring tube longitudinal axis (10),
wherein each of the ultrasonic measuring devices (7, 8) is arranged on the measuring tube (5),
wherein each ultrasonic measuring device (7, 8) comprises a first ultrasonic transducer (7a, 8a) and a second ultrasonic transducer (7b, 8b), wherein the first (7a, 8a) and the second ultrasonic transducer (7b, 8b) of each ultrasonic measuring device (7, 8) span a sound measuring path (11, 12) with a sound axis (13, 14) and the sound measuring path (11, 12) and the sound axis (13, 14) penetrate the measuring tube interior (9),

wherein the control device (6) is designed to perform ultrasonic measurements with the ultrasonic measuring devices (7, 8),

wherein the sound axis (13) of the first ultrasonic measuring device (7) and the sound axis (14) of the second ultrasonic measuring device (8) span a sound measuring plane (15) which runs essentially parallel to the longitudinal axis (10) of the measuring tube,

**characterized in**

**that** the ultrasonic flowmeter (1) is designed to perform a method (2) according to any one of claims 4 to 9.

2. Ultrasonic flowmeter (1) according to claim 1, **characterized in that** the sound axis of the first ultrasonic measuring device and the sound axis of the second ultrasonic measuring device cross each other.

3. Ultrasonic flowmeter (1) according to claim 1 or 2, **characterized in that** the sound measurement plane lies above the longitudinal axis of the measuring tube in relation to the earth gravity field vector.

4. Method (2) for operating an ultrasonic flowmeter (1) having a measuring tube (5), a control device (6) and at least a first ultrasonic measuring device (7) and a second ultrasonic measuring device (8), wherein the measuring tube (5) has a measuring tube interior (9) and a measuring tube longitudinal axis (10), wherein each of the ultrasonic measuring devices (7, 8) is arranged on the measuring tube (5), wherein each ultrasonic measuring device (7, 8) comprises a first ultrasonic transducer (7a, 8a) and a second ultrasonic transducer (7b, 8b), wherein the first (7a, 8a) and the second (7b, 8b) of each ultrasonic measuring device (7, 8) span a sound measuring path (11, 12) with a sound axis (13, 14) and wherein the sound measuring path (11, 12) and the sound axis (13, 14) penetrate the measuring tube interior (9), wherein the control device (6) is designed to perform ultrasonic measurements with the ultrasonic measuring devices (7, 8), wherein the sound axis (13) of the first ultrasonic measuring device (7) and the sound axis (14) of the second ultrasonic measuring device (8) span a sound measurement plane (15) which runs essentially parallel to the longitudinal axis (10) of the measuring tube,

wherein a medium with at least one liquid and one gaseous phase flows through the measuring tube (5),

**characterized in**

**that** a first sound velocity of a first measuring signal is determined (16) via the sound measuring path of the first ultrasonic measuring device and is assigned to the gaseous phase if the first sound velocity is below a limit sound velocity,

**that** a second sound velocity of a second measuring signal is determined (17) via the sound measuring path of the second ultrasonic measuring device and is assigned to the gaseous phase if the second sound velocity is below a limit sound velocity,

**that**, if at least one of the sound velocities is assigned to the gaseous phase, a flow velocity of the gaseous phase is determined (18) from the at least one sound velocity.

5. Method (2) according to claim 4, **characterized in that**, if both sound velocities are assigned to the gaseous phase, the flow velocity is determined from both sound velocities.

6. Method (2) according to any one of claims 4 or 5, **characterized in that** the method is performed a first and a second time,

that during the first execution at least one sound velocity is assigned to the gaseous phase, **in that**, during the second execution, none of the sonic velocities is assigned to the gaseous phase, and **in that** a flow velocity of the gaseous phase is determined from the at least one sonic velocity from the first execution.

7. Method (2) according to any one of claims 4 to 6, **characterized in that** information about the flow regime is determined using at least one property of the first and/or the second measuring signal.

8. Method (2) according to any one of claims 4 to 7, **characterized in that** the presence of surge in the measuring tube (5) is determined using the first and/or second sound velocity.

9. Method (2) according to any one of claims 4 to 8, **characterized in that** information about the composition of the gaseous phase is determined from the speed of sound of the first and/or the second measuring signal.

10. Measuring system (3) comprising an ultrasonic flowmeter (1) and a multiphase flowmeter (20), **characterized in**

**that** the ultrasonic flowmeter (1) according to one of claims 1 to 3 is designed to perform a method according to one of claims 4 to 9.

11. Measuring system (3) according to claim 10, **characterized in that** the multiphase flowmeter (20) is a nuclear magnetic flowmeter.

12. Measuring system (3) according to claim 10 or 11, **characterized in that** the ultrasonic flowmeter (1) is arranged downstream of the multiphase flowmeter (20).

13. Method (4) for operating a measuring system (3) according to any one of claims 10 to 12, **characterized in**

> **that** a proportion of the liquid phase and optionally a flow velocity of the gaseous phase are determined (24) by the multiphase flowmeter (20),
> **that** a flow velocity of the gaseous phase is determined (25) by the ultrasonic flowmeter (1), wherein a method according to any one of claims 4 to 9 is performed by the ultrasonic flowmeter (1),
> **that**, using the proportion of the liquid phase, the proportion of the gaseous phase is determined (26),
> **that**, if the flow velocity of the gaseous phase determined by the ultrasonic flowmeter is above a limit flow velocity, the flow of the gaseous phase is determined (27) using the flow velocity of the gaseous phase determined by the ultrasonic flowmeter and the proportion of the gaseous phase.

14. Method (4) according to claim 13, **characterized in that**, if the flow velocity of the gaseous phase determined by the ultrasonic flowmeter (1) is below the limit flow velocity, the flow of the gaseous phase is determined using the flow velocity of the gaseous phase determined by the multiphase flowmeter (20) and from the proportion of the gaseous phase.

15. Method (4) according to claim 13, **characterized in that**, if the flow velocity of the gaseous phase determined by the ultrasonic flowmeter (1) is below the limit flow velocity, the flow rate of the gaseous phase is determined using the flow velocities of the gaseous phase determined by the ultrasonic flowmeter (1) and by the multiphase flowmeter (20) and from the proportion of the gaseous phase.

16. Method (4) according to any one of claims 13 to 15, **characterized in that** the pressure within the multiphase flow meter (20) is determined and that the flow of the gaseous phase is determined at least using the flow velocity of the gaseous phase determined by the ultrasonic flowmeter (1) when the pressure within the multiphase flowmeter (20) exceeds a pressure limit value.

**Revendications**

1. Débitmètre à ultrasons (1), comprenant un tube de mesure (5), un dispositif de commande (6) et au moins un premier dispositif de mesure par ultrasons (7) et un deuxième dispositif de mesure par ultrasons (8),

> dans lequel le tube de mesure (5) présente un espace intérieur de tube de mesure (9) et un axe longitudinal de tube de mesure (10),
> dans lequel chacun des dispositifs de mesure par ultrasons (7, 8) est disposé sur le tube de mesure (5), chaque dispositif de mesure par ultrasons (7, 8) présentant un premier transducteur à ultrasons (7a, 8a) et un deuxième transducteur à ultrasons (7b, 8b), dans lequel le premier (7a, 8a) et le deuxième (7b, 8b) transducteur à ultrasons de chaque dispositif de mesure par ultrasons (7, 8) forment une section de mesure du son (11, 12) avec un axe de faisceau sonore (13, 14), et la section de mesure du son (11, 12) et l'axe de faisceau sonore (13, 14) pénètrent dans l'espace intérieur de tube de mesure (9),
> dans lequel le dispositif de commande (6) est réalisé pour effectuer des mesures par ultrasons avec les dispositifs de mesure par ultrasons (7, 8),
> dans lequel l'axe de faisceau sonore (13) du premier dispositif de mesure par ultrasons (7) et l'axe de faisceau sonore (14) du deuxième dispositif de mesure par ultrasons (8) forment un plan de mesure du son (15) qui s'étend substantiellement en parallèle à l'axe longitudinal de tube de mesure (10),
> **caractérisé en ce que** le débitmètre à ultrasons (1) est réalisé pour exécuter un procédé (2) selon l'une quelconque des revendications 4 à 9.

2. Débitmètre à ultrasons (1) selon la revendication 1, **caractérisé en ce que** l'axe de faisceau sonore du premier dispositif de mesure par ultrasons et l'axe de faisceau sonore du deuxième dispositif de mesure par ultrasons se croisent.

3. Débitmètre à ultrasons (1) selon la revendication 1 ou 2, **caractérisé en ce que** le plan de mesure du son est situé au-dessus de l'axe longitudinal de tube de mesure par rapport au vecteur de champ de pesanteur terrestre.

**4.** Procédé (2) permettant de faire fonctionner un débitmètre à ultrasons (1) comprenant un tube de mesure (5), un dispositif de commande (6) et au moins un premier dispositif de mesure par ultrasons (7) et un deuxième dispositif de mesure par ultrasons (8), le tube de mesure (5) présentant un espace intérieur de tube de mesure (9) et un axe longitudinal de tube de mesure (10), dans lequel chacun des dispositifs de mesure par ultrasons (7, 8) est disposé sur le tube de mesure (5), dans lequel chaque dispositif de mesure par ultrasons (7, 8) présente un premier transducteur à ultrasons (7a, 8a) et un deuxième transducteur à ultrasons (7b, 8b), dans lequel le premier (7a, 8a) et le deuxième (7b, 8b) transducteur à ultrasons de chaque dispositif de mesure par ultrasons (7, 8) forment une section de mesure du son (11, 12) avec un axe de faisceau sonore (13, 14), et la section de mesure du son (11, 12) et l'axe de faisceau sonore (13, 14) pénètrent dans l'espace intérieur de tube de mesure (9), dans lequel le dispositif de commande (6) est réalisé pour effectuer des mesures par ultrasons avec les dispositifs de mesure par ultrasons (7, 8), dans lequel l'axe de faisceau sonore (13) du premier dispositif de mesure par ultrasons (7) et l'axe de faisceau sonore (14) du deuxième dispositif de mesure par ultrasons (8) forment un plan de mesure du son (15) qui s'étend substantiellement en parallèle à l'axe longitudinal de tube de mesure (10),

dans lequel on fait passer par le tube de mesure (5) un milieu ayant au moins une phase liquide et une phase gazeuse,
**caractérisé**
**en ce qu'**une première vitesse du son d'un premier signal de mesure sur la section de mesure du son du premier dispositif de mesure par ultrasons est déterminée (16) et associée à la phase gazeuse si la première vitesse du son est inférieure à une vitesse du son limite,
**en ce qu'**une deuxième vitesse du son d'un deuxième signal de mesure sur la section de mesure du son du deuxième dispositif de mesure par ultrasons est déterminée (17) et associée à la phase gazeuse si la deuxième vitesse du son est inférieure à une vitesse du son limite,
**en ce que**, si au moins l'une des vitesses du son est associée à la phase gazeuse, une vitesse d'écoulement de la phase gazeuse est déterminée (18) à partir de ladite au moins une vitesse du son.

**5.** Procédé (2) selon la revendication 4, **caractérisé en ce que**, si les deux vitesses du son sont associées à la phase gazeuse, la vitesse d'écoulement est déterminée à partir des deux vitesses du son.

**6.** Procédé (2) selon l'une quelconque des revendications 4 ou 5, **caractérisé**

en ce que le procédé est exécuté une première et une deuxième fois,
**en ce que** pendant la première exécution, au moins une vitesse du son est associée à la phase gazeuse,
**en ce que** pendant la deuxième exécution, aucune des vitesses du son n'est associée à la phase gazeuse, et
**en ce qu'**une vitesse d'écoulement de la phase gazeuse est déterminée à partir de ladite au moins une vitesse du son de la première exécution.

**7.** Procédé (2) selon l'une quelconque des revendications 4 à 6, **caractérisé en ce qu'**une information concernant le régime d'écoulement est déterminée en utilisant au moins une propriété du premier et/ou du deuxième signal de mesure.

**8.** Procédé (2) selon l'une quelconque des revendications 4 à 7, **caractérisé en ce que** la présence de bouchons dans le tube de mesure (5) est déterminée en utilisant la première et/ou la deuxième vitesse du son.

**9.** Procédé (2) selon l'une quelconque des revendications 4 à 8, **caractérisé en ce qu'**une information concernant la composition de la phase gazeuse est déterminée à partir de la vitesse du son du premier et/ou du deuxième signal de mesure.

**10.** Ensemble de mesure (3), comprenant un débitmètre à ultrasons (1) et un débitmètre polyphasé (20), **caractérisé en ce que** le débitmètre à ultrasons (1) selon l'une quelconque des revendications 1 à 3 est réalisé pour exécuter un procédé selon l'une quelconque des revendications 4 à 9.

**11.** Ensemble de mesure (3) selon la revendication 10, **caractérisé en ce que** le débitmètre polyphasé (20) est un débitmètre à résonance magnétique nucléaire.

**12.** Ensemble de mesure (3) selon la revendication 10 ou 11, **caractérisé en ce que** débitmètre à ultrasons (1) est disposé en aval du débitmètre polyphasé (20).

**13.** Procédé (4) permettant de faire fonctionner un ensemble de mesure (3) selon l'une quelconque des revendications 10 à 12, **caractérisé**

en ce que le débitmètre polyphasé (20) détermine (24) une fraction de la phase liquide et en option une vitesse d'écoulement de la phase gazeuse,
**en ce que** le débitmètre à ultrasons (1) détermine (25) une vitesse d'écoulement de la phase gazeuse, le débitmètre à ultrasons (1) exécutant un procédé selon l'une quelconque des revendications 4 à 9,

**en ce que** la fraction de la phase gazeuse est déterminée (26) en utilisant la fraction de la phase liquide,

**en ce que**, si la vitesse d'écoulement de la phase gazeuse, déterminée par le débitmètre à ultrasons, est supérieure à une vitesse d'écoulement limite, le débit de la phase gazeuse est déterminé (27) en utilisant la vitesse d'écoulement de la phase gazeuse, déterminée par le débitmètre à ultrasons, et la fraction de la phase gazeuse.

14. Procédé (4) selon la revendication 13, **caractérisé en ce que**, si la vitesse d'écoulement de la phase gazeuse, déterminée par le débitmètre à ultrasons (1), est inférieure à la vitesse d'écoulement limite, le débit de la phase gazeuse est déterminé en utilisant la vitesse d'écoulement de la phase gazeuse, déterminée par le débitmètre polyphasé (20), et la fraction de la phase gazeuse.

15. Procédé (4) selon la revendication 13, **caractérisé en ce que**, si la vitesse d'écoulement de la phase gazeuse, déterminée par le débitmètre à ultrasons (1), est inférieure à la vitesse d'écoulement limite, le débit de la phase gazeuse est déterminé en utilisant les vitesses d'écoulement de la phase gazeuse, déterminées par le débitmètre polyphasé (20), et la fraction de la phase gazeuse.

16. Procédé (4) selon l'une quelconque des revendications 13 à 15, **caractérisé**

**en ce que** la pression à l'intérieur du débitmètre polyphasé (20) est déterminée, et
**en ce que** le débit de la phase gazeuse est déterminé au moins en utilisant la vitesse d'écoulement de la phase gazeuse, déterminée par le débitmètre à ultrasons (1), si la pression à l'intérieur du débitmètre polyphasé (20) dépasse une valeur limite de pression.

## Fig. 1

## Fig. 2

2

16

17

18

19

# Fig. 3

20        1        3

21

# Fig. 4

20   23   3   22   1

Fig. 5

4

24

25

26

27

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017328152 A1